(19)

Europäisches
Patentamt
European
Patent Office
Office européen
des brevets

(11) **EP 2 679 101 A1**

(12) **EUROPEAN PATENT APPLICATION**

(43) Date of publication:
**01.01.2014 Bulletin 2014/01**

(21) Application number: **12174438.7**

(22) Date of filing: **29.06.2012**

(51) Int Cl.:
*A23L 1/0522* (2006.01)     *A23L 1/09* (2006.01)
*A23L 1/24* (2006.01)      *A23D 7/005* (2006.01)
*A23D 7/015* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Corn Products Development, Inc.
Bridgewater, NJ 08807 (US)**

(72) Inventors:
• **Much, Florian
22964 Steinburg (DE)**

• **Carrat, Cyril
23843 Bad Oldesloe (DE)**
• **Hendrikx, Peter J.H.M.
21436 Marschacht (DE)**

(74) Representative: **Held, Stephan et al
Meissner, Bolte & Partner GbR
Chemistry
Widenmayerstraße 47
80538 München (DE)**

(54) **Edible oil-in-water emulsion**

(57)     The present invention relates to an edible oil-in-water emulsion comprising at least one alkenyl succinic anhydride derivative and/or dextrin, at least one oil, at least one water based liquid, at least one hydrocolloid, at least one inhibited starch, and optionally egg and/or at least one egg derivative.

EP 2 679 101 A1

**Description**

The present invention relates to an edible oil-in-water emulsion, in particular to an emulsified sauce, a process for producing such an edible oil-in-water emulsion and a food product comprising such an edible oil-in-water emulsion, in particular in form of a coleslaw.

Full fat thick and spoonable mayonnaise is used successfully all around the world as a base and binder for making coleslaw, potato salads, shrimp cocktails, thousand island dressings, etc. Food service/catering companies would prefer to offer their customers a lower fat alternative that has the same binding functionality. A key issue today is that when using a starch containing low fat spoonable mayonnaise in a coleslaw application, the water released from the chopped vegetable and the amylase activity originating from the chopped vegetable results in significant breakdown of the mayonnaise apparent through thinning, serum separation (by caterers and culinary chefs referred to as leakage) and loss of cling and appealing surface visuals.

The impact of this shelf-life limitation is that caterers cannot use such a low fat, starch containing mayonnaise to deliver good quality salads for a prolonged eating occasion (buffet style). If they would do, there would also be a lot of extra waste generated as such a coleslaw cannot be kept overnight for the next eating-occasion, as would be the case when using a full fat mayonnaise. In food service/catering type applications processors are aiming for three days cold storage stability with no significant serum separation and acceptable quality. It is possible to switch from starch to an amylase resistant hydrocolloids based low fat spoonable formulation, but that results typically in undesirable eating characteristics and textures (long/cohesive/globby/not melting away) that are far away from the typical eating experience of a full fat mayonnaise benchmark.

It was the object underlying the present invention to provide an edible oil-in-water emulsion which avoids the above-mentioned disadvantages. In particular, it was the object underlying the present invention to provide an emulsified sauce, like a reduced fat mayonnaise, that can be used as a base and binder for vegetable salads and does not show significant breakdown apparent through thinning, serum separation and loss of cling within three to four days after production and which still has appealing surface visuals. It is finally the object of the present invention to prepare such an edible oil-in-water emulsion with a significantly reduced fat content than conventional full fat mayonnaises.

Said object is solved by the edible oil-in-water emulsion according to claim 1, which comprises at least one alkenyl succinic anhydride derivative and/or dextrin, at least one oil, at least one water based liquid, at least one hydrocolloid, at least one inhibited starch, and optionally egg and/or at least one egg derivative.

During their research, the present inventors have surprisingly found that when combining these ingredients, this novel edible oil-in-water emulsion shows significant reduction in thinning behaviour and serum separation when it is used to prepare a typical vegetable salad as described above.

In this connection, it is very important that the reduction in serum separation is achieved by the edible oil-in-water emulsion according to the present invention and at the same time the edible oil-in-water emulsion according to the present invention still keeps an acceptable texture, taste and good surface visual appeal and gloss.

Only with the edible oil-in-water emulsion according to the present invention the above-mentioned problems are solved. The combination of the specific ingredients of claim 1 is decisive. For example, no reduction in leakage can be achieved without the use of at least one alkenyl succinic anhydride derivative and/or dextrin.

In addition, with the additional inclusion of egg and/or at least one egg derivative next to the alkenyl succinic anhydride derivative and/or dextrin, a further reduction in leakage can be achieved and the colour/surface appeal of the edible oil-in-water emulsion becomes optimal. The inclusion of egg and/or at least one egg derivative is not needed to obtain a stable emulsion with small oil-droplet sizes, but it does help to avoid a loss of opacity or obtaining an orange colour when the emulsion is mixed into a vegetable salad, for example a typical coleslaw containing chopped vegetables, including carrots.

Accordingly, with the specific combination of ingredients of the edible oil-in-water emulsion according to the present invention, the benefit of reduced serum separation is achieved without losing visual attractiveness.

Starch, as used herein, is intended to include all starches, flours and starch containing materials derived from tubers, grain, legumes and seeds or any other native source, any of which may be suitable for use herein. A native starch as used herein, is one as it is found in nature. Also suitable are starches derived from a plant obtained by standard breeding techniques including crossbreeding, translo-cation, inversion, transformation or any other method of gene or chromosome engineering to include variations thereof which are typically referred to as genetically modified organisms (GMO). In addition, starch derived from a plant grown from artificial mutations (including those from chemical mutagens) and variations of the above generic composition, which may be produced by known standard methods of mutation breeding, are also suitable herein.

Typical sources for the starches are cereals, tubers, roots, legumes and fruits. The native source can be corn (maize), pea, potato, sweet potato, banana, barley, wheat, rice, oat, sago, amaranth, tapioca (cassava), arrowroot, canna, triti-cale, and sorghum, as well as waxy (low amylose) varieties thereof. Particularly useful sources include tapioca and waxy maize. As used herein, the term "waxy" or "low amylose" is intended to include a starch containing no more than about 10%, particularly no more than about 5%, most particularly no more than about 2%, by weight amylose. The invention embodied within relates to all starches and is intended to include all starch sources, including those which occur in nature, are genetically altered, or are obtained from hybrid breeding.

Inhibited starches are well known in the art.

Alkenyl succinic anhydride derivatives, especially OSA starches, are well-known by the starch /food industry as alternatives for using egg-derivatives, especially to replace the emulsion formation and stabilising effect of egg-yolk. Contrary to inhibited granular starches, they act as non-granular molecular dispersions that support the stabilisation of the O/W-emulsion interface.

According to the present invention in principle, any alkenyl succinic anhydride derivative can be used in the edible oil-in-water emulsion according to the present invention.

Preferably the alkenyl succinic anhydride derivative is an octenyl succinic anhydride derivatized starch (OSA starch). Although in principle any OSA starch can be used in the edible oil-in-water emulsion according to the present invention, the OSA starch is a starch as typically produced within the food additives legislation and limits as used by the starch industry can be used in the edible oil-in-water emulsion according to the present invention. Most preferably the OSA starch meets the requirements of E 1450. (Regulation (EC) No. 1333/2008 of the European Parliament and of the Council of December 16, 2008 on food additives).

Accordingly, the OSA starch can be derived from various base starches with different OSA treatments. Preferably, the OSA starch is derived from tapioca, waxy maize, waxy tapioca, waxy rice, and most preferably from waxy maize.

In lieu of the at least one alkenyl succinic anhydride derivative at least one dextrin can be used in the edible oil-in-water emulsion according to the present invention.

Dextrin, as used herein, is intended to include all starches which have been hydrolyzed / converted by one or more processes known in the art. Accordingly, a dextrin, as used herein, is a hydrolysis product of starch.

Preferably the dextrin is a hydrophobically modified dextrin having a dextrose equivalent DE of 1 to 20, preferably of 1 to 10, most preferably an OSA dextrin.

The alkenyl succinic anhydride derivative and/or the dextrin is preferably used in an amount of 0.3 to 1.5 weight % and more preferably in an amount of 0.8 to 1.5 weight %, based on the whole oil-in-water emulsion.

A first screening of different OSA starches has shown that OSA starches with a higher molecular weight of the starch backbone provide more viscosity to the emulsion and also seem to perform better than others with regard to the present invention.

While in principle, any oil can be used in the edible oil-in-water emulsion according to the present invention, it is preferably selected from the group consisting of vegetable oils, like sunflower oil, rapeseed oil, olive oil, soya oil and/or palm oil. In a particularly preferred embodiment, at least one oil is sunflower oil.

The oil is preferably used in an amount of 10 to 65 weight %, more preferably in an amount of 10 to 55 weight % and most preferably in an amount of 10 to 45 weight %, based on the whole oil-in-water emulsion.

The edible oil-in-water emulsion according to the present invention also comprises at least one water based liquid. While in principal any water based liquid can be used in the edible oil-in-water emulsion according to the present invention, it is preferred that the at least one water based liquid is selected from the group consisting of water, vinegar and milk. In a particularly preferred embodiment, the at least one water based liquid is water and/or white wine vinegar.

The at least one water based liquid is preferably used in an amount of 20 to 60 weight %, and more preferably in an amount of 30 to 50 weight %, based in the whole oil-in-water emulsion.

In the context of the present invention, the term hydrocolloid is to be understood to describe a substance comprising particles, which when mixed with a water based liquid is microscopically dispersed throughout the water based liquid. While in the edible oil-in-water emulsions according to the present invention in principle any hydrocolloid can be used, it is preferred that the at least one hydrocolloid in the edible oil-in-water emulsion according to the present invention is an enzyme resistant galactomannan. Examples of suitable hydrocolloids include without limitation agar-agar, carrageenan processed eucheuma algae, locust bean gum, guar gum, tragacanth, gum arabic, xanthan, karaya gum, tara flour, cellulose, methyl cellulose, hydroxypropyl cellulose, hydroxypropyl methyl cellulose, ethyl methyl cellulose, carboxy methyl cellulose, sodium carboxy methyl cellulose, crosslinked sodium carboxy methyl cellulose and/or enzymatically hydrolyzed carboxy methyl cellulose, etc. In a particularly preferred embodiment the enzyme resistant galactomannan is guar gum and/or xanthan which have the advantage that when they are combined at the right level together with the other texturising ingredients in the formulation, like the inhibited starch, they are providing the right rheological and sensorical characteristics to obtain a stable emulsion without compromising texture and taste.

The at least one hydrocolloid is preferably used in an amount of 0.001 to 2 weight % and more preferably in an amount of 0.05 to 1 weight %, based on the whole oil-in-water emulsion.

In a preferred embodiment, the inhibited starch is a cook-up chemically-crosslinked starch. In a further preferred embodiment the inhibited starch is a pregelatinized chemically-crosslinked starch. In a further preferred embodiment the inhibited starch is a cook-up thermally-inhibited starch. In a further preferred embodiment the inhibited starch is a pregelatinized thermally-inhibited starch. Preferably, the inhibited starch is a highly chemically crosslinked or highly thermally-inhibited starch, because the cross-linking/inhibition levels are preferably sufficient to provide process resistance of the starch during the manufacturing of the mayonnaise. This applies as well for cook-up and pregelatinized starches and can be determined by checking the status of the starch after processing, using light microscopy or measuring viscosity loss.

Highly chemically-crosslinked or thermally-inhibited starch means the starch has a swelling volume and a soluble fraction between 2 and 40 ml/g and of less than 20% soluble fraction, preferably between 15 and 35 ml/g and of less than 20% soluble fraction, and most preferably between 20 and 30 ml/g and of less than 20% soluble fraction, determined according to the following swelling volume test:

Swelling volume test:

Principle/Scope:

This procedure tests for the extent of starch granule swelling after being cooked in pH 6.0 buffer as a representation of inhibition level. The granule inhibition is expressed as the swollen volume per gram of starch corrected for the amount of soluble material leached out of the starch during cooking. The starch is cooked at 2% solids and diluted to 1.0% solids in graduated cylinders. The settled volume is recorded after no change in the settled volume is obtained. The supernatant is analyzed for % soluble material. The settled volume and % soluble material are then used to calculate the corrected swelling volume as the representation of inhibition level.

Equipment:

1. Glass cook-up beakers, 100 mL measuring 3 1/2" high x 2 1/16" in diameter, or equivalent (one for each sample).
2. Glass or plastic graduated cylinders, 100 mL (one per dilution for each sample).
3. Plastic beaker, 250 mL (one per dilution for each sample).
4. Balance, top loading, accurate to 0.01 gram accuracy.
5. Boiling water bath, kept at 100°C and water level set so that the cook-up beaker is immersed at least 50% in boiling water during the cook cycle. The bath should maintain a rolling boil at all times.
6. Thermometer, general purpose (capable of measuring up to 100°C accurately) to be used to monitor the water bath temperature.
7. Holder for keeping glass cook-up beakers safely in the boiling water bath.
8. Plastic transfer pipettes.
9. Rubber stopper, #11 with hole bored to fit stirring rod, or similar cover, to fit over the cook-up beakers.
10. Plastic stirring rod.
11. Timer.
12. Heat-resistant gloves, designed for handling hot dry items at 100°C.
13. Laboratory Film - Parafilm.

Reagents:

1. pH 6.0 buffer solution: The preparation of 1 kilogram is detailed below. Preparation of pH 6.0 Buffer Solution (Sodium phosphate/Citric acid), for formulations of larger or smaller quantities of the buffer solution. Enough solution for all samples planned to be tested needs to be prepared in advance (approximately 200 mL pH 6.0 buffer solution is needed per sample for one dilution, and 300 mL for two dilutions. For instance, if 5 products/batches (in duplicate) are going to be tested with two dilutions (1.0% and 0.5% solids) 3.0 L of the buffer solution will be needed. In this case a 4.0 L beaker might be appropriate to use to prepare the buffer solution).

Preparation of 1 kilogram of pH 6.0 Buffer Solution

Dissolve 7.74 grams of citric acid, monohydrate ($C_6H_8O_7 \cdot H_2O$, FW = 210.14, J.T.Baker # 0110 or equivalent) and 17.93 grams of sodium phosphate, dibasic, anhydrous ($Na_2HPO_4$, FW = 141.96, J.T.Baker # 3828 or equivalent) in 974.33 grams of distilled or deionized water. Mix using magnetic stir bar and stir plate until the citric acid and sodium phosphate dissolve. Check that the pH of the buffer solution is 6.0 $\pm$ 0.1. Transfer the pH 6.0 buffer solution from the beaker into a clean dry container. Label the container appropriately. Old and new buffer solutions should NOT be stored in the same container (The buffer solution will be more stable if refrigerated, but refrigeration is not necessary if the buffer will be used within two weeks. If the buffer is refrigerated, it must be brought to room temperature prior to use. Discard the buffer solution if there is any evidence of microbial growth or if the pH is not 6.0 ± 0.1).

2. Purified water, distilled or deionized

Procedure:

Prepare duplicate cooks for each batch of starch being tested.

Preparation and Cooking:

1. Tare the top loading balance, weigh the cook-up beaker with a stirring rod and record the weight (Carefully label each cook-up beaker and stirring rod. It is recommended to label and record the tared weight of cook-up beaker + stirring rod for all samples before starting the preparation and cooking to avoid mistakes while working with multiple samples. This is the tare weight).

2. Tare the balance with the cook-up beaker and the stirring rod. Add 2.00 ± 0.05 grams anhydrous basis of starch to the beaker.

3. Bring the total weight to 100 ± 0.05 grams using the pH 6.0 buffer solution. Thoroughly mix the sample to disperse the starch well.

4. Place the sample in the boiling water bath with a rolling boil, and start a timer for 20 minutes. Make sure the cook-up beaker is immersed in the boiling water.

5. Stir the sample maintaining rapid stirring for the first 2 minutes in the bath.

6. At the end of the 2 minute period, stopper the beaker with a stopper through which a small hole is bored for the stirring rod. Make sure that the stopper fits closely to minimize evaporation and skin formation.

7. Allow the sample to remain undisturbed in the boiling water bath for the remainder of the 20 minutes cooking period.

8. At the end of the 20 minutes, take out the cook-up beaker from the bath and allow it to cool down for about an hour (Do not mix the sample right after it is taken out of the bath. Mixing the sample while it is still hot causes some of the cooked starch to remain on the walls of the cook-up beaker. Once cooled down, this layer of starch is difficult to incorporate in the mix and can affect the measurement. It is better to perform the mixing and preparing the dilutions while the sample is still warm to obtain a more homogenous material. One hour cool down period is a good benchmark).

9. Wipe the outside of the beaker dry, remove the stopper, and then bring the sample to "tare weight (beaker and stirring rod) + 100 grams" with purified water.

10. Apply gentle stirring to incorporate the added water to obtain a homogeneous sample (Care must be taken to ensure that the material is mixed well and a homogeneous sample is transferred during subsequent steps).

Dilutions:

11. Place a 250 mL beaker on the top loading balance and tare the balance.

12. Transfer 55 ± 0.1 grams of the sample into the beaker.

13. To obtain 1.0% solids dilution, tare the balance with the 250 mL beaker + sample, and add 55 ± 0.1 grams of pH 6.0 buffer into the beaker.

14. Mix well making sure that a homogeneous sample is obtained (care must be taken to ensure that the material is mixed well and a homogeneous sample is transferred during subsequent steps).

15. Place a 100 mL glass graduated cylinder on the balance and tare the balance.

16. From the 250 mL beaker, transfer 100 ± 0.1 grams into the graduated cylinder.

17. Cover the cylinder with parafilm.

18. If a swelling volume of 50 mL/gram or higher is expected, a subsequent dilution to 0.5% solids needs to be performed. For 0.5% solids dilution, use the remaining material from step #10.

19. Place another clean 250 mL beaker on the top loading balance and tare the balance.

20. Transfer 28 ± 0.1 grams of the sample (from step #10) into this new beaker.

21. To obtain 0.5% solids dilution, tare the balance with the 250 mL beaker + sample, and add 84 ± 0.1 grams of pH 6.0 buffer into the beaker.

22. Follow steps #14 to #17.

23. For both dilutions, allow starch to settle over time. Record settled volume after 24 hours, 48 hours, 72 hours or longer until there is no change in the settled volume. The reading should be taken on the demarcation line between the settled starch and the supernatant. Care must be taken not to disturb the settled starch during waiting periods and while taking settled volume readings. The graduated cylinders should be kept in a secure place where they can not be knocked down.

24. Measure the concentration of solubles in the supernatant using a Polarimeter. Make sure to do the soluble material analysis after reaching complete settling of the starch (care must be taken not to disturb the settled starch while pipeting out the supernatant for % solubles measurement).

25. Calculate the % solubles (for % solubles calculation, it is assumed that all solubles are in solution (no solubles in the swollen ganules)) and the corrected swelling volume using the following equations:

$$\% \, Solubles = \frac{Concentration \ reading \ from \ Polarimeter \times \left[100 - \left(SV \times 0.62\right)\right]}{Mass \ of \ starch \ in \ respective \ dilution}$$

Concentration reading from Polarimeter (gram/mL)
100: Total volume in the graduated cylinder (mL)
SV: Settled volume reading form graduated cylinder (mL)
0.62: Maximum volume fraction that the swollen granules occupy in the settled volume
Mass of starch in respective dilution: '1 gram' for 1% dilution or '0.5 gram' for 0.5% dilution

$$q = \frac{SV}{Mass \ of \ starch \ in \ respective \ dilution}$$

q: Settled volume per gram of starch (mL/gram)

$$Corrected \ swelling \ volume = \frac{q}{100 - \% \, Solubles} * 100$$

Example calculation:

Assume that 0.5% dilution is used, Concentration reading from Polarimeter is 0.04 gram/mL, and SV reading is 20mL.

$$\% \text{ Solubles} = \frac{0.04 \frac{\text{gram}}{\text{mL}} \times \left[100 - (20 \times 0.62)\right] \text{mL}}{0.5 \text{gram}} = 7\%$$

$$q = \frac{20 \text{mL}}{0.5 \text{gram}} = 40 \frac{\text{mL}}{\text{gram}}$$

$$\text{Corrected swelling volume} = \frac{40 \frac{\text{mL}}{\text{gram}}}{100 - 7} * 100 = 43 \frac{\text{mL}}{\text{gram}}$$

The inhibited starch is not modified with OSA or any other modification which will provide emulsification properties, and accordingly differs from the alkenyl succinic anhydride derivative.

The inhibited starch may be added in any amount desired or necessary to obtain the functionality of the composition.

In a preferred embodiment, the inhibited starch is preferably used in an amount of 0.5 to 6 weight %, more preferably in an amount of 2 to 6 weight % and most preferably in an amount of 2.5 to 5 weight %, based on the whole oil-in-water emulsion.

The preparation of the inhibited starches is known in the art. The preparation of chemically-crosslinked starches may be found in standard texts such as Modified Starches: Properties and Uses, Ed. Wurzburg, CRC Press, Inc., Florida (1986). The preparation of thermally-inhibited starches is for example described in US5718770, US5720822, US5725676, US5932017, US6010574, US6451121.

The edible oil-in-water emulsion according to the present invention can also optionally comprise egg and/or at least one egg derivative. The term egg derivative is to be understood in the context of the present invention as any product that is derived from egg. In a preferred embodiment, the at least one egg derivative is an egg yolk, for example a fresh, pasteurized, frozen or dried egg yolk. In a particularly preferred embodiment, the at least one egg derivative is a pasteurized liquid egg yolk.

The egg and/or at least one egg derivative is preferably used in an amount of 0.1 to 10 weight %, more preferably in an amount of 1 to 6 weight % and most preferably in an amount of 2 to 4 weight %, based on the whole oil-in-water emulsion.

The addition of egg and/or at least one egg derivate has the additional advantage that the colour/surface appeal of the edible oil-in-water emulsion becomes optimal.

The edible oil-in-water emulsions according to the present invention can further comprise any of such further ingredients which can typically be used in edible oil-in-water emulsions, in particular in an emulsified sauce, like a reduced fat mayonnaise. Such further ingredients can be for instance salt, sugar, mustard, citrus fruit, melt-based ingredients, etc.

In a preferred embodiment, the edible oil-in-water emulsion is an emulsified sauce, preferably a mayonnaise or dressing, and most preferably a reduced fat mayonnaise or dressing.

Reduced fat mayonnaise or dressing means that the fat content is lower than about 65 weight %, based on the whole oil-in-water emulsion. Preferably the fat content is lower than about 55 weight % and more preferably lower than about 45 weight %, based on the whole oil-in-water emulsion.

While the edible oil-in-water emulsions according to the present invention can in principal contain the ingredients mentioned above over a wide range of weight ratios, it is preferred that the edible oil-in-water emulsion according to the present invention comprises the ingredients, based on the whole oil-in-water emulsion, in the following weight ratios:

0.3 to 1.5 weight % of at least one alkenyl succinic anhydride derivative, preferably at least one octenyl succinic anhydride derivatized starch (OSA starch) and/or dextrin, preferably a pyrodextrin obtainable by treatment of starches with heat and acid or a starch derivative having a dextrose equivalent DE of 1 to 20, in particular 0.8 to 1.5 weight %, 20 to 65 weight % of at least one oil, in particular 30 to 40 weight %, 20 to 60 weight % of at least one water based liquid, in particular 30 to 50 weight %,

0.01 to 2 weight % of at least one hydrocolloid, in particular 0.05 to 1 weight %,
0.5 to 6 weight % of at least one inhibited starch, in particular 3 to 5 weight %, and
optionally up to 4 weight % egg and/or at least one egg derivative, in particular 2 to 4 weight %.

In a preferred embodiment, all ingredients of the edible oil-in-water emulsion according to the present invention are food grade, preferably food grade according to EC Regulation 1333/2008 of December 16, 2008.

An advantage of the edible oil-in-water emulsion according to the present invention is that it shows a very advantageous thinning behaviour at low serum separation, a good colour/surface appeal while at the same time it is possible to provide caterers and culinary chefs with a fat content which is lower than the fat content typically found in full fat mayonnaises.

Traditionally when preparing an oil-in-water emulsion, like a low fat mayonnaise, the emulsifier (either an egg-derivative like egg-yolk or an OSA starch) can be added to the water-phase and/or to the oil-phase before the emulsification process starts. When using an inhibited granular cook-up thickening starch, that typically needs to be added to the water-phase and precooked before making the emulsion. In case of using a pregelatinised inhibited starch, this can also be added via the oil-phase towards the end of the emulsification process.

In a preferred embodiment, the present invention is directed to a process for the preparation of an edible oil-in-water emulsion which is characterised by the following steps:

Step 1: Preparing a water phase comprising of at least one water based liquid, typically including also the sugar, salt, vinegar, mustard.

Step 2: Mix half of the oil into the water-phase while stirring, to create a first pre-emulsion.

Step 3: Premix the remainder of the oil with at least one hydrocolloid and at least one pregelatinised inhibited granular starch.

Step 4: Emulsifying the pre-emulsion water phase obtained in step 1 and 2 with the oil phase obtained in step 3,

a) wherein at least one alkenyl succinic anhydride derivative and/or dextrin is introduced before step 4,
b) or preferably if egg is used in combination with alkenyl succinic anhydride derivative, wherein egg and/or at least one egg derivate is introduced at the beginning of step 4 and at least one alkenyl succinic anhydride derivative and/or dextrin is introduced at the end of step 4.

This means that if egg is also used together with the alkenyl succinic anhydride derivative for obtaining the best visuals compared to benchmark mayonnaises, it is best to add egg first and the alkenyl succinic anhydride derivative last.

In a particularly preferred embodiment the egg and/or at least one egg derivative is introduced at the beginning of step 4 and at least one alkenyl succinic anhydride derivative and/or dextrin is introduced at the end of step 4. This has the advantage that the breakdown of the final mayonnaise emulsion in the coleslaw application according to the present invention seems further retarded compared to a process in which that emulsion is prepared by adding the alkenyl succinic anhydride derivative before or at the same time as the egg. If no egg is used (only alkenyl succinic anhydride derivative) the visuals are not as good (emulsion looks more orange, although emulsion droplet size is all right).

In a preferred embodiment of the process described above, the alkenyl succinic anhydride derivative is an OSA starch.

The present invention is also directed to a food product, comprising the edible oil-in-water emulsion as described above. Preferred food products according to the present invention are coleslaw, potato salads, shrimp cocktails, thousand island dressings and vegetable salads. In a particularly preferred embodiment, the food product according to the present invention is a coleslaw.

In a preferred embodiment the serum separation after three days of the coleslaw according to the present invention is reduced by more than 20%, more preferably by more than 30%, and most preferably by more than 50%, in comparison to a prior art coleslaw under identical conditions, like the same batch of vegetables, the same fat content, the same emulsion droplet size distribution, the same cut size, the same mixing ratio etc.

## Examples

The following Examples are presented to further illustrate and explain the present invention and should not be taken as limiting in any regard.

In Examples 1 to 22 mayonnaises were prepared from the ingredients indicated in Tables 1 to 5.

The mayonnaises according to Examples 1 to 22 were prepared in a FrymaKoruma homogenising, mixing and dispersing unit type DISHO LABOR V 60/10 (FrymaKoruma GmbH, Neuenburg, Germany). In the process for preparing the mayonnaises according to Examples 1 to 22 solids and liquids with good flow properties are fed directly to the homogenizing tool via the vacuum unit (which also prevents the undesired ingress of air). The recirculation line returns the product back to the vessel. This, plus the special scraper-stirrer, generates the additional macromixing by means of vertical convection. The conical shape of the vessel floor routes the product to the single-chamber homogenizing system, where the entire procedure is repeated. The machine is emptied either by means of a discharge valve at the homogenizer or via the recirculation line downstream of the homogenizer.

The process for preparing the mayonnaises according to Examples 1 to 22 in the FrymaKoruma homogenising mixing and dispersing unit type DISHO LABOR V 60/10 can be summarised as follows:

1) Add sugar and salt into water / vinegar and mustard / liquid egg yolk
2) Mix in the FrymaKoruma sp4 30 sec vacuum -0.4
3) Emulsify half the oil at sp8 for 5min vacuum -0.4
4) Mix the viscosifing/OSA starch(es) and the guar / xanthan into some oil- add to FrymaKoruma
5) Add rest of the oil and mix at sp 10 for 1 min, no vacuum
6) Emulsify at sp 10 for 1 minute, no vacuum
7) Fill

Coleslaws were prepared from the mayonnaises according to Examples 1 to 22 with the following recipe:

200 g mayonnaise
240 g fresh white cabbage (~ 100 mm x 3 mm x 2 mm)
120 g fresh carrots (~ 60 mm x 2 mm x 2 mm)
60 g fresh onions (~ 40 mm x 3 mm x 2 mm)

The required raw material was sliced with a sharp knife and rasped in the desired size. The components were gently mixed by hand. Serum separation tests were performed with the coleslaws as follows:

1) The coleslaw was placed in a sieve with 2 mm mesh size;
2) Liquid was allowed to drip out for five minutes, whereby the sieve was shaken three times each minute; and
3) The dripping loss was calculated in gram.

The serum separation test results can only be compared within the same series of experiments using the same batch of vegetables. Examples 1 to 4, Examples 5 to 8, Examples 9 to 13, Examples 14 to 18 and Examples 19 to 22 are each one series of experiments.

Examples 1 to 4

The compositions of the mayonnaises according to Examples 1 to 4, the results of the serum separation tests conducted on the coleslaws prepared from these mayonnaises and the respective sensory assessments are summarised in Table 1.

Table 1

| Ingredients in % | 1 | 2 | 3 | 4 |
|---|---|---|---|---|
| Water | 43.70 | 43.50 | 40.60 | 40.40 |
| White wine vinegar 6% | 6.00 | 6.00 | 6.00 | 6.00 |
| Caster sugar | 2.50 | 2.50 | 2.50 | 2.50 |
| Salt | 1.50 | 1.50 | 1.50 | 1.50 |
| Thomy mustard | 2.00 | 2.00 | 2.00 | 2.00 |
| Pasteurised liquid egg yolk | | | 4.00 | 4.00 |
| Sunflower oil | 40.00 | 40.00 | 40.00 | 40.00 |

(continued)

| Ingredients in % | 1 | 2 | 3 | 4 |
|---|---|---|---|---|
| Chemically modified food starch refined from waxy maize (E1450) | 0.90 | 0.90 | | |
| Pregelatinized, chemically modified food starch refined from waxy maize (E1442) | 3.00 | 3.30 | 3.00 | 3.30 |
| Xanthan (KELTROL F - CP Kelco) | 0.08 | 0.06 | 0.08 | 0.06 |
| Guar (VIDOGUM G200I - Unipectin) | 0.32 | 0.24 | 0.32 | 0.24 |
| | | | | |
| Serum separation | 32 | 41 | 77 | 86 |
| | | | | |
| Sensory assessment | Fairly gelled but with a long and sticky texture when spooned out. Very creamy mouthfeel but a bit slimy. | Less gelled than Example 1, a bit longer in texture. Less mouthfeel and a bit less slimy. | Less gelled than Example 1 and Example 2 but very long texture when spooned out. Significantly less mouthfeel than Examples 1 and 2 and still a bit slimy. | Like Example 3 but with less body and a longer texture. Product is the least slimy. Turns orange when mixed with the salad. |

Examples 1 and 2 are according to the invention. Examples 3 and 4 are Comparative Examples. One will see from these Examples that the use of a mayonnaise comprising OSA starch (chemically modified food starch refined from waxy maize (E1450)), hydrocolloid (xanthan and guar) and inhibited starch ( pregelatinized, chemically modified food starch refined from waxy maize (E1442)) leads to a reduced serum separation in comparison to the use of a mayonnaise containing only hydrocolloid and process resistant starch.

Examples 5 to 8

The compositions of the mayonnaises according to Examples 5 to 8, the results of the serum separation tests conducted on the coleslaws prepared from these mayonnaises and the respective sensory assessments are summarised in Table 2.

Table 2

| Ingredients in % | 5 | 6 | 7 | 8 |
|---|---|---|---|---|
| Water | 43.70 | 43.50 | 40.60 | 40.40 |
| White wine vinegar 6% | 6.00 | 6.00 | 6.00 | 6.00 |
| Caster sugar | 2.50 | 2.50 | 2.50 | 2.50 |
| Salt | 1.50 | 1.50 | 1.50 | 1.50 |
| Thomy mustard | 2.00 | 2.00 | 2.00 | 2.00 |
| Pasteurised liquid egg yolk | | | 4.00 | 4.00 |

(continued)

| Ingredients in % | 5 | 6 | 7 | 8 |
|---|---|---|---|---|
| Sunflower oil | 40.00 | 40.00 | 40.00 | 40.00 |
| Chemically modified food starch refined from waxy maize (E1450) | 0.90 | 0.90 | | |
| Pregelatinized, chemically modified food starch refined from waxy maize (E1442) | 3.00 | 3.30 | 3.00 | 3.30 |
| Guar (VIDOGUM G200I - Unipectin) | 0.32 | 0.24 | 0.32 | 0.24 |
| Xanthan (KELTROL F - CP Kelco) | 0.08 | 0.06 | 0.08 | 0.06 |
| | | | | |
| Serum separation | 10 | 19 | 25 | 57 |
| | | | | |
| Sensory assessment | Fairly gelled but long textured when spoon dipped into the mayonnaise. Very glossy and white. Heavy mouth-coating with oily mouth-feel. Turns orange when blended with vegetables. Not glossy when blended with vegetables. | Less gelled but still spoonable texture which turns long when spoon dipped into the mayonnaise. Very glossy and white. Still heavy mouthcoating with oily mouthfeel but less pronounced than Example 4. | Shorter texture than Example 4, more orange coloured, still long texture when spoon dipped into the mayonnaise. Much faster meltaway In the mouth than with OSA starch but with an oily mouthfeel. | Good spoonability but still long texture when spoon dipped into the mayonnaise. Glossy. Fastest meltaway In the mouth with an oily mouthfeel. |

Examples 4 and 5 are according to the invention. Examples 6 and 7 are Comparative Examples. One will see from these Examples that the use of a mayonnaise comprising OSA starch (chemically modified food starch refined from waxy maize (E1450)), hydrocolloid (guar and xanthan) and inhibited starch (pregelatinized, chemically modified food starch refined from waxy maize (E1442)) leads to a reduced serum separation in comparison to the use of a mayonnaise containing only hydrocolloid and process resistant starch.

Examples 9 to 13

The compositions of the mayonnaises according to Examples 9 to 13, the results of the serum separation tests conducted on the coleslaws prepared from these mayonnaises and the respective sensory assessments are summarised in Table 3.

Table 3

| Ingredients in %. | 9 | 10 | 11 | 12 | 13 |
|---|---|---|---|---|---|
| Water | 43.70 | 43.40 | 42.70 | 41.70 | 39.70 |
| White wine vinegar 6% | 6.00 | 6.00 | 6.00 | 6.00 | 6.00 |

(continued)

| Ingredients in %. | 9 | 10 | 11 | 12 | 13 |
|---|---|---|---|---|---|
| Caster sugar | 2.50 | 2.50 | 2.50 | 2.50 | 2.50 |
| Salt | 1.50 | 1.50 | 1.50 | 1.50 | 1.50 |
| Thomy mustard | 2.00 | 2.00 | 2.00 | 2.00 | 2.00 |
| Pasteurised liquid egg yolk | | | 1.00 | 2.00 | 4.00 |
| Sunflower oil | 40.00 | 40.00 | 40.00 | 40.00 | 40.00 |
| Chemically modified food starch refined from waxy maize (E1450) | 0.90 | 0.90 | 0.90 | 0.90 | 0.90 |
| Pregelatinized, chemically modified food starch refined from waxy maize (E1442) | 3.00 | 3.00 | 3.00 | 3.00 | 3.00 |
| Guar (VIDOGUM G200I - Unipectin) | 0.32 | 0.32 | 0.32 | 0.32 | 0.32 |
| Xanthan (KELTROL F - CP Kelco) | 0.08 | 0.08 | 0.08 | 0.08 | 0.08 |
| Titanium dioxide | | 0.30 | | | |
| Serum separation | 3 | 0 | 3 | 0 | 0 |
| | | | | | |
| Sensory assessment | Fairly gelled, white, glossy, short textured, but failing when mixed with a spoon; heavy mouthfeel, creamy, a bit slimy. | Same as Example 9 but whiter. Adding titanium dioxide slightly improved the color of the mayonnaise in the salad but it still looks very yellow and matt. | Salt was forgotten and added after making the mayonnaise; softer, less gelled, longer in texture, less creamy than all other trials. | Similar to Example 9 but a bit creamier and a bit less sticky. | Most gelled, most viscous, most sticky of the series. Adding OSA starch on top of egg yolk is leading to whiter, glossier, fresher looking salad. |

All Examples 9 to 13 show a low serum separation. The addition of pasteurized liquid egg yolk leads to a good colour on the coleslaw, even to a better colour than the use of titanium dioxide. The best results were obtained according to Example 13 in which the OSA starch was added at the end.

Examples 14 to 18

The compositions of the mayonnaises according to Examples 14 to 18, the results of the serum separation tests conducted on the coleslaws prepared from these mayonnaises, and the respective sensory assessments are summarised in Table 4.

Table 4

| Ingredients in % | 14 | 15 | 16 | 17 | 18 |
|---|---|---|---|---|---|
| Water | 43.70 | 39.70 | 39.70 | 40.60 | 39.70 |
| White wine vinegar 6% | 6.00 | 6.00 | 6.00 | 6.00 | 6.00 |
| Caster sugar | 2.50 | 2.50 | 2.50 | 2.50 | 2.50 |
| Salt | 1.50 | 1.50 | 1.50 | 1.50 | 1.50 |
| Thomy mustard | 2.00 | 2.00 | 2.00 | 2.00 | 2.00 |
| Pasteurised liquid egg yolk | 0.00 | 4.00 | 4.00 | 4.00 | 4.00 |
| Sunflower oil | 40.00 | 40.00 | 40.00 | 40.00 | 40.00 |
| Chemically modified food starch refined from waxy maize (E1450) | 0.90 | | | | 0.90 |
| Pregelatinized, chemically modified food starch refined from waxy maize (E1442) | 3.00 | 3.00 | 3.00 | 3.00 | 3.00 |
| Guar (VIDOGUM G200I - Unipectin) | 0.32 | 0.32 | 0.32 | 0.32 | 0.32 |
| Xanthan (KELTROL F - CP Kelco) | 0.08 | 0.08 | 0.08 | 0.08 | 0.08 |
| Instant Textra | | 0.90 | | | |
| High stability dextrine refined from tapioca starch | | | 0.90 | | |
| | | | | | |
| Serum separation | 14 | 25 | 14 | 28 | 3 |
| | | | | | |
| Sensory assessment | | | | | |

Examples 14, 16 and 18 are according to the invention (all of them showed a reduced serum separation). Example 16 shows that instead of an OSA starch a dextrin can be used. Examples 15 and 17 are Comparative Examples. These Examples show in addition that, when an OSA starch or a dextrine, hydrocolloid and inhibited starch are combined with pasteurized liquid egg yolk, the white glossy color is kept in the salad while retaining excellent binding capabilities. Best results were obtained according to Example 18 in which the OSA starch was added at the end.

Examples 19 to 22

The compositions of the mayonnaises according to Examples 19 to 22, the results of the serum separation tests conducted on the coleslaws prepared from there mayonnaises and the respective sensory assessments are summarised in Table 5.

Table 5

| Ingredients in % | 19 | 20 | 21 | 22 |
|---|---|---|---|---|
| Water | 43.70 | 40.60 | 39.70 | 39.40 |
| White wine vinegar 6% | 6.00 | 6.00 | 6.00 | 6.00 |
| Caster sugar | 2.50 | 2.50 | 2.50 | 2.50 |
| Salt | 1.50 | 1.50 | 1.50 | 1.50 |
| Thomy mustard | 2.00 | 2.00 | 2.00 | 2.00 |
| Pasteurised liquid egg yolk | 0.00 | 4.00 | 4.00 | 5.00 |
| Sunflower oil | 40.00 | 40.00 | 40.00 | 40.00 |
| Chemically modified food starch refined from waxy maize (E1450) | 0.90 | | 0.90 | |

(continued)

| Ingredients in % | 19 | 20 | 21 | 22 |
|---|---|---|---|---|
| Pregelatinized, chemically modified food starch refined from waxy maize (E1442) | 3.00 | 3.00 | 3.00 | 3.60 |
| Guar (VIDOGUM G200I - Unipectin) | 0.32 | 0.32 | 0.32 | |
| Xanthan (KELTROL F - CP Kelco) | 0.08 | 0.08 | 0.08 | |
| | | | | |
| Serum separation | | 45 | 8 | |
| | | | | |
| Sensory assessment | | | | |

Examples 19 and 21 are according to the invention. Examples 20 and 22 are Comparative Examples (no OSA starch). Best results were obtained according to Example 21 in which the OSA starch was added at the end.

Examples 23 to 40

In Examples 23 to 40 various coleslaws were prepared. Two different mayonnaises and three different coleslaws were prepared. Thereby the following coding was used:

M1-2 = Mayonnaises 1 and 2
S1-3 = Coleslaw with different cut size and mixing ratio
D1-3 = Storage time at 4°C (d = day)

The compositions for the mayonnaises, the results of the serum separation tests conducted on the coleslaws prepared from these mayonnaises and the respective sensory assessments are summarised in Tables 6 and 7.

The salads were prepared according to the following recipe:

Salad composition

Salad 1 (Large cut size):

200g mayonnaise
240g fresh white cabbage (~100mm x 3mm x 2mm)
120g fresh carrots (~60mm x 2mm x 2mm)
60g fresh onions (~40mm x 3mm x 2mm)

Salad 2 (Large cut size, reverse carrots/cabbage ratio):

200g mayonnaise
120g fresh white cabbage (~100mm x 3mm x 2mm)
240g fresh carrots (~60mm x 2mm x 2mm)
60g fresh onions (~40mm x 3mm x 2mm)

Salad 3 (As S1, but small cut size):

200g mayonnaise
240g fresh white cabbage (~50mm x 2mm x 2mm)
120g fresh carrots (~20mm x 1mm x 1mm)
60g fresh onions (~20mm x 2mm x 2mm)

Table 6

| Ingredients in % | 23 | 24 | 25 | 26 | 27 | 28 | 29 | 30 |
|---|---|---|---|---|---|---|---|---|
| | M1S1D1 | M2S1D1 | M1S2D1 | M2S2D1 | M1S3D1 | M2S3D1 | M1S1D2 | M2S1D2 |
| Water | 40.60 | 39.70 | 40.60 | 39.70 | 40.60 | 39.70 | 40.60 | 39.70 |
| White wine vinegar 6% | 6.00 | 6.00 | 6.00 | 6.00 | 6.00 | 6.00 | 6.00 | 6.00 |
| Caster sugar | 2.50 | 2.50 | 2.50 | 2.50 | 2.50 | 2.50 | 2.50 | 2.50 |
| Salt | 1.50 | 1.50 | 1.50 | 1.50 | 1.50 | 1.50 | 1.50 | 1.50 |
| Thomy mustard | 2.00 | 2.00 | 2.00 | 2.00 | 2.00 | 2.00 | 2.00 | 2.00 |
| Pasteurised liquid egg yolk | 4.00 | 4.00 | 4.00 | 4.00 | 4.00 | 4.00 | 4.00 | 4.00 |
| Sunflower oil | 40.00 | 40.00 | 40.00 | 40.00 | 40.00 | 40.00 | 40.00 | 40.00 |
| Chemically modified food starch refined from waxy maize (E1450) | | 0.90 | | 0.90 | | 0.90 | | 0.90 |
| Pregelatinized, chemically modified food starch refined from waxy maize (E1442) | 3.00 | 3.00 | 3.00 | 3.00 | 3.00 | 3.00 | 3.00 | 3.00 |
| Xanthan (KELTROL F - CP Kelco) | 0.08 | 0.08 | 0.08 | 0.08 | 0.08 | 0.08 | 0.08 | 0.08 |
| Guar (VIDOGUM G200I - Unipectin) | 0.32 | 0.32 | 0.32 | 0.32 | 0.32 | 0.32 | 0.32 | 0.32 |
| | 100.00 | 100.00 | 100.00 | 100.00 | 100.00 | 100.00 | 100.00 | 100.00 |

(continued)

| Ingredients in % | 23 | 24 | 25 | 26 | 27 | 28 | 29 | 30 |
|---|---|---|---|---|---|---|---|---|
| Serum separation (leakage) in gram | 7.5 | 0.0 | 38.0 | 1.8 | 35.5 | 2.5 | 64.9 | 15.4 |
| Sensory assessment | Good covered, still white, starts to look old. | Very good covered, looks fresh. | The red color of the carrots has a negative impact of the visual properties. Looks already old. | Very good covered, looks fresh. | The smallest cut size of the salad has a negative impact on Mayo 1. Looks already old. | Very good covered, looks fresh. | Vegetables are uncovered, no white appearance. Looks already old. | Good covered, looks still fresh. |

Table 7

| Ingredients in % | 31 | 32 | 33 | 34 | 35 | 36 | 37 | 38 | 39 | 40 |
|---|---|---|---|---|---|---|---|---|---|---|
| | M1S2D2 | M2S2D2 | M1S3D2 | M2S3D2 | M1S1D3 | M2S1D3 | M1S2D3 | M2S2D3 | M1S3D3 | M2S3D3 |
| Water | 40.60 | 39.70 | 40.60 | 39.70 | 40.60 | 39.70 | 40.60 | 39.70 | 40.60 | 39.70 |
| White wine vinegar 6% | 6.00 | 6.00 | 6.00 | 6.00 | 6.00 | 6.00 | 6.00 | 6.00 | 6.00 | 6.00 |
| Caster sugar | 2.50 | 2.50 | 2.50 | 2.50 | 2.50 | 2.50 | 2.50 | 2.50 | 2.50 | 2.50 |
| Salt | 1.50 | 1.50 | 1.50 | 1.50 | 1.50 | 1.50 | 1.50 | 1.50 | 1.50 | 1.50 |
| Thomy mustard | 2.00 | 2.00 | 2.00 | 2.00 | 2.00 | 2.00 | 2.00 | 2.00 | 2.00 | 2.00 |
| Pasteurised liquid egg yolk | 4.00 | 4.00 | 4.00 | 4.00 | 4.00 | 4.00 | 4.00 | 4.00 | 4.00 | 4.00 |
| Sunflower oil | 40.00 | 40.00 | 40.00 | 40.00 | 40.00 | 40.00 | 40.00 | 40.00 | 40.00 | 40.00 |
| Chemically modified food starch refined from waxy maize (E1450) | | 0.90 | | 0.90 | | 0.90 | | 0.90 | | 0.90 |
| Pregelatinized, chemically modified food starch refined from waxy maize (E1442) | 3.00 | 3.00 | 3.00 | 3.00 | 3.00 | 3.00 | 3.00 | 3.00 | 3.00 | 3.00 |
| Xanthan (KELTROL F - CP Kelco) | 0.08 | 0.08 | 0.08 | 0.08 | 0.08 | 0.08 | 0.08 | 0.08 | 0.08 | 0.08 |
| Guar (VIDOGUM G200I - Unipectin) | 0.32 | 0.32 | 0.32 | 0.32 | 0.32 | 0.32 | 0.32 | 0.32 | 0.32 | 0.32 |
| | 100.00 | 100.00 | 100.00 | 100.00 | 100.00 | 100.00 | 100.00 | 100.00 | 100.00 | 100.00 |

(continued)

| Ingredients in % | 31 | 32 | 33 | 34 | 35 | 36 | 37 | 38 | 39 | 40 |
|---|---|---|---|---|---|---|---|---|---|---|
| Serum separation (leakage) in gram | 70.3 | 18.6 | 41.4 | 31.2 | 66.2 | 13.9 | 77.6 | 24.3 | 51.5 | 32.7 |
| Sensory assessment | Vegetables are uncovered, no white appearance. Looks old. | Good covered, looks still fresh. | Vegetables are uncovered, no white appearance. Looks old. | Good covered, looks still fresh. | Vegetables are uncovered, no white appearance. Looks old. | Still good covered, looks still fresh. | Vegetables are uncovered, no white appearance. Looks old. | Still good covered, looks still fresh. | Vegetables are uncovered, no white appearance. Looks old. | Still good covered, looks still fresh. |

Examples 24, 26, 28, 30, 32, 34, 36, 38 and 40 are according to the invention. Examples 23, 25, 27, 29, 31, 33, 35, 37 and 39 are Comparative Examples.

The results can be summarized as follows:

The Comparative Examples show unacceptable visual defects even after one day, in particular, displaying an old look. The mayonnaises seem translucent and only a little bit coverage of the vegetables are given by the mayonnaise. After the following days the results got even worse. The serum separation is high and unacceptable.

Contrary thereto the Examples according to the invention give better results regarding the visual properties. Also after three days of storage the mayonnaises according to the invention covered the salads and looked fresh. The serum separation was also low compared to the Comparative Examples.

The Comparative Examples show that the mayonnaises used therein lead to the worst results, independently from the salad cut size.

The mayonnaises according to the invention seem to be more sensitive regarding the finer cut size of salad 3.

The carrot ratio of salad 2 is two times higher than in salads 1 and 3. Therefore, the red colour and the higher enzyme ratio will influence the performance of the mayonnaise. The mayonnaises according to the invention are the most stable mayonnaises and also cover the high amount of orange carrots. The mayonnaises according to the Comparative Examples could not optimally cover the orange carrots optimal over time.

## Claims

1. Edible oil-in-water emulsion comprising
   at least one alkenyl succinic anhydride derivative and/or dextrin,
   at least one oil,
   at least one water based liquid,
   at least one hydrocolloid,
   at least one inhibited starch, and
   optionally egg and/or at least one egg derivative.

2. Edible oil-in-water emulsion according to claim 1, wherein the at least one alkenyl succinic anhydride derivative is an octenyl succinic anhydride derivatized starch (OSA starch).

3. Edible oil-in-water emulsion according to claim 1 or 2, wherein the at least one dextrin is a hydrophobically modified dextrin having a dextrose equivalent DE of 1 to 20, preferably an OSA dextrin.

4. Edible oil-in-water emulsion according to any of the preceding claims, wherein the edible oil-in-water emulsion is an emulsified sauce, preferably a mayonnaise or a dressing.

5. Edible oil-in-water emulsion according to any of claims 2 to 4, wherein the at least one OSA starch is an octenyl succinic anhydride derivatized waxy maize starch.

6. Edible oil-in-water emulsion according to any of the preceding claims, wherein the at least one oil is a vegetable oil, preferably selected from the group consisting of sunflower oil, rapeseed oil, olive oil, soya oil and palm oil.

7. Edible oil-in-water emulsion according to any of the preceding claims, wherein the at least one water based liquid is selected from the group consisting of water, vinegar and milk.

8. Edible oil-in-water emulsion according to any of the preceding claims, wherein the at least one hydrocolloid is an enzyme resistant galactomannan, preferably guar gum and/or xanthan.

9. Edible oil-in-water emulsion according to any of the preceding claims, wherein the inhibited starch is a chemically-crosslinked starch, preferably a highly chemically-crosslinked starch.

10. Edible oil-in-water emulsion according to any of the preceding claims 1 to 8, wherein the inhibited starch is a thermally-inhibited starch.

11. Edible oil-in-water emulsion according to any of the preceding claims, wherein the at least one egg derivative is egg yolk, preferably liquid egg yolk or egg yolk powder.

12. Edible oil-in-water emulsion according to any of the preceding claims wherein the edible oil-in-water emulsion comprises at least one of the following additional ingredients: salt, sugar, mustard, citrus fruit, and milk based ingredients.

13. Edible oil-in-water emulsion according to any of the preceding claims, wherein the fat content of the edible oil-in-water emulsion is lower than about 65 weight %, preferably lower than about 55 weight % and most preferably lower than about 45 weight %.

14. Edible oil-in-water emulsion according to any of the preceding claims, wherein the edible oil-in-water emulsion comprises, based on the whole oil-in-water emulsion,

   0.3 to 1.5 weight % of at least one alkenyl succinic anhydride derivative, preferably at least one octenyl succinic anhydride derivatized starch (OSA starch), and/or dextrin, preferably a hydrophobically modified dextrin, having a dextrose equivalent DE of 1 to 20,
   20 to 65 weight % of at least one oil,
   20 to 60 weight % of at least one water based liquid,
   0.01 to 2 weight % of at least one hydrocolloid,
   0.5 to 6 weight % of at least one inhibited starch, and
   optionally up to 4 weight % egg or at least one egg derivative.

15. Process for the preparation of an edible oil-in-water emulsion according to at least one of the claims 1 to 14, **characterized by** the following steps:

   Step 1: Preparing a water phase comprising of at least one water based liquid, typically including also the sugar, salt, vinegar, mustard.
   Step 2: Mix half of the oil into the water-phase while stirring, to create a first pre-emulsion.
   Step 3: Premix the remainder of the oil with at least one hydrocolloid and at least one pregelatinised inhibited granular starch.
   Step 4: Emulsifying the pre-emulsion water phase obtained in step 1 and 2 with the oil phase obtained in step 3,

      a) wherein at least one alkenyl succinic anhydride derivative and/or dextrin is introduced before step 4
      b) or preferably if egg is used in combination with alkenyl succinic anhydride derivative, wherein egg and/or at least one egg derivate is introduced at the beginning of step 4 and at least alkenyl succinic anhydride derivative starch and/or dextrin is introduced at the end of step 4.

16. Edible oil-in-water emulsion obtainable according to the process of claim 15.

17. Food product, preferably a coleslaw, comprising an edible oil-in-water emulsion according to at least one of the claims 1 to 16.

Europäisches
Patentamt

European
Patent Office

Office européen
des brevets

## EUROPEAN SEARCH REPORT

Application Number

EP 12 17 4438

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 512 311 A (CAPITANI TERESA A [US] ET AL) 30 April 1996 (1996-04-30) * column 3, line 52 - line 64 * * column 6, line 46 - column 7, line 14 * * examples 2,3; tables I, II,IV * ----- | 1-17 | INV. A23L1/0522 A23L1/09 A23L1/24 A23D7/005 A23D7/015 |
| X | WO 2008/045790 A1 (RICH PRODUCTS CORP [US]; PIATKO MICHAEL [US]; PERKS CHERYL [CA]) 17 April 2008 (2008-04-17) * page 5, line 31 - page 9, line 18; table I * * examples * ----- | 1,2, 5-10, 12-16 | |
| X | DATABASE WPI Week 200201 Thomson Scientific, London, GB; AN 2002-003122 XP002688524, & JP 2001 252042 A (QP CORP) 18 September 2001 (2001-09-18) * abstract * ----- | 1,4,7,8, 12,13 | |
| Y | US 6 221 420 B1 (THOMAS DAVID J [US] ET AL) 24 April 2001 (2001-04-24) * example 35 * * column 4, line 65 - column 5, line 13 * ----- | 1-17 | TECHNICAL FIELDS SEARCHED (IPC) A23L A23D |
| Y | CA 2 229 565 A1 (MORITA CO LTD [JP]) 3 January 1999 (1999-01-03) * page 9, line 8 - line 25 * ----- | 1-17 | |
| Y | WO 2007/063084 A1 (CARGILL INC [US]; SARNEEL FRANS JOHAN [NL]; PEREMANS JOHAN AUGUSTA MAR) 7 June 2007 (2007-06-07) * paragraph [0001] * * paragraph [0016] - paragraph [0017] * ----- -/-- | 1-17 | |

The present search report has been drawn up for all claims

| Place of search | Date of completion of the search | Examiner |
|---|---|---|
| The Hague | 5 December 2012 | Cardin, Aurélie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 12 17 4438

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 23 54 606 A1 (CPC INTERNATIONAL INC) 22 May 1974 (1974-05-22) * page 3, line 17 - page 4, line 4 * * examples * ----- | 1-17 | |
| A | JP 5 276898 A (UNKNOWN) 26 October 1993 (1993-10-26) * abstract * ----- | 1-17 | |

TECHNICAL FIELDS
SEARCHED      (IPC)

The present search report has been drawn up for all claims

| Place of search | Date of completion of the search | Examiner |
|---|---|---|
| The Hague | 5 December 2012 | Cardin, Aurélie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

**ANNEX TO THE EUROPEAN SEARCH REPORT
ON EUROPEAN PATENT APPLICATION NO.**                          EP 12 17 4438

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2012

| Patent document cited in search report | | | Publication date | Patent family member(s) | | | Publication date |
|---|---|---|---|---|---|---|---|
| US 5512311 | A | | 30-04-1996 | NONE | | | |
| WO 2008045790 | A1 | | 17-04-2008 | AR | 063161 | A1 | 30-12-2008 |
| | | | | CA | 2665640 | A1 | 17-04-2008 |
| | | | | CN | 101534652 | A | 16-09-2009 |
| | | | | CO | 6180483 | A2 | 19-07-2010 |
| | | | | EP | 2068639 | A1 | 17-06-2009 |
| | | | | KR | 20090064457 | A | 18-06-2009 |
| | | | | RU | 2009117188 | A | 20-11-2010 |
| | | | | TW | 200822870 | A | 01-06-2008 |
| | | | | US | 2008085353 | A1 | 10-04-2008 |
| | | | | WO | 2008045790 | A1 | 17-04-2008 |
| | | | | ZA | 200902550 | A | 31-03-2010 |
| JP 2001252042 | A | | 18-09-2001 | JP | 4136256 | B2 | 20-08-2008 |
| | | | | JP | 2001252042 | A | 18-09-2001 |
| US 6221420 | B1 | | 24-04-2001 | NONE | | | |
| CA 2229565 | A1 | | 03-01-1999 | AU | 742635 | B2 | 10-01-2002 |
| | | | | CA | 2229565 | A1 | 03-01-1999 |
| | | | | ID | 20887 | A | 18-03-1999 |
| | | | | JP | 3227495 | B2 | 12-11-2001 |
| | | | | TW | 508220 | B | 01-11-2002 |
| WO 2007063084 | A1 | | 07-06-2007 | AT | 453331 | T | 15-01-2010 |
| | | | | AU | 2006319133 | A1 | 07-06-2007 |
| | | | | CA | 2630591 | A1 | 07-06-2007 |
| | | | | CN | 101321473 | A | 10-12-2008 |
| | | | | DK | 1830667 | T3 | 06-04-2010 |
| | | | | EP | 1830667 | A1 | 12-09-2007 |
| | | | | ES | 2339055 | T3 | 14-05-2010 |
| | | | | JP | 4972099 | B2 | 11-07-2012 |
| | | | | JP | 2009517062 | A | 30-04-2009 |
| | | | | KR | 20080077659 | A | 25-08-2008 |
| | | | | PT | 1830667 | E | 11-02-2010 |
| | | | | US | 2008274254 | A1 | 06-11-2008 |
| | | | | WO | 2007063084 | A1 | 07-06-2007 |
| | | | | ZA | 200804394 | A | 27-01-2010 |
| DE 2354606 | A1 | | 22-05-1974 | DE | 2354606 | A1 | 22-05-1974 |
| | | | | FR | 2205533 | A1 | 31-05-1974 |
| | | | | GB | 1406750 | A | 17-09-1975 |
| | | | | IT | 1006109 | B | 30-09-1976 |
| | | | | NL | 7314851 | A | 02-05-1974 |

EPO FORM P0459

For more details about this annex : see Official Journal of the European Patent Office, No. 12/82

**EP 2 679 101 A1**

## ANNEX TO THE EUROPEAN SEARCH REPORT
## ON EUROPEAN PATENT APPLICATION NO.

EP 12 17 4438

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2012

| Patent document cited in search report | | Publication date | Patent family member(s) | | Publication date |
|---|---|---|---|---|---|
| JP 5276898 | A | 26-10-1993 | JP | 3169430 B2 | 28-05-2001 |
| | | | JP | 5276898 A | 26-10-1993 |

EPO FORM P0459

For more details about this annex : see Official Journal of the European Patent Office, No. 12/82

## REFERENCES CITED IN THE DESCRIPTION

**Patent documents cited in the description**

- US 5718770 A
- US 5720822 A
- US 5725676 A
- US 5932017 A
- US 6010574 A
- US 6451121 B

**Non-patent literature cited in the description**

- Starches: Properties and Uses. CRC Press, Inc, 1986